# EUROPÄISCHE PATENTSCHRIFT

(11) **EP 1 339 275 B1**
(45) Veröffentlichungstag und Bekanntmachung des Hinweises auf die Patenterteilung: **02.03.2005**
(21) Anmeldenummer: 01999276.7
(22) Anmeldetag: 03.12.2001
(51) Int. Cl.: A01G 27/04, A01G 29/00

(54) **FORMKÖRPER ZUR VERBESSERUNG DER KULTIVIERUNGSBEDINGUNGEN VON PFLANZEN**
MOULDED BODY FOR IMPROVING CULTIVATION CONDITIONS FOR PLANTS
CORPS MOULE PERMETTANT D'AMELIORER LES CONDITIONS DE CULTURE DE PLANTES

(30) Priorität: 04.12.2000 CH 235200
(43) Veröffentlichungstag der Anmeldung: 03.09.2003
(73) Patentinhaber: IUP INSTITUT FÜR UMWELTPFLEGE AG, 3063 Ittigen (CH)
(72) Erfinder: BAUMANN, Gerhard, CH-3063 Ittigen (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE
(86) Internationale Anmeldenummer: PCT/CH2001/000695
(87) Internationale Veröffentlichungsnummer: WO 2002/045484

(56) Entgegenhaltungen:
- EP-A- 0 390 948
- EP-A- 0 865 725
- DE-A- 3 510 513
- FR-A- 2 766 327
- US-A- 5 692 338
- US-A- 5 884 431
- US-A- 6 079 156

## Beschreibung

Die vorliegende Erfindung bezieht sich auf einen Formkörper zur Verbesserung der Kultivierungsbedingungen von Pflanzen gemäss Oberbegriff des Anspruchs 1.

Es ist bekannt, dass sich Pflanzenwurzeln in Gefässen aller Art, insbesondere in Kulturtöpfen, vor allem an den unteren Randzonen und über dem Gefässboden entwickeln. Es entwickelt sich ein dichter Wurzelfilz, wenn nicht rechtzeitig umgetopft wird. Später breitet sich das Wurzelwerk in den inneren Ballenbereich aus und verdichtet insbesondere bei stark wachsenden Pflanzen den gesamten Wurzelballen. Daraus ergeben sich die folgenden Probleme:
- Schlechte und/oder unregelmässige Verteilung des Giesswassers oder der Nährlösung;
- Bildung von Rissen und Kanälen zwischen Wurzelballen und Topfwandung, dadurch verursachter einseitiger Wasserabfluss und Nichtversorgung von Teilen des Wurzelballens mit Wasser;
- insgesamt rasches Austrocknen des. Wurzelballen;
- Mangelerscheinungen bei den Pflanzen;
- Absterben der Pflanzen;
- beim Giessen in einen Untersatz oder Übertopf des Pflanzgefässes wird nur der untere Wurzelballenbereich erfasst, wo sich der dichteste Wurzelfilz befindet. Bleibt das Wasser lang im Untersatz stehen, faulen die noch intakten und gesunden Wurzeln. Die Folge davon sind Schäden an Wurzeln und Pflanzen bis zu deren Absterben.

Pflanzen mit geringem Wasserbedarf, z. B. Zimmerpflanzen an lichtarmen Standorten, werden oft zu viel gegossen und damit regelrecht ersäuft. Die meisten Zimmerpflanzen leiden vor allem an zu vielen Wassergaben und zu kurzen Giessintervallen, so dass der Wurzelballen nicht antrocknen oder austrocknen kann. Dadurch ergeben sich Sauerstoffmangel und Übersäuerung des Substrates bei Erdkulturen.

Weitere Probleme der Verdichtung des Wurzelballens unter diesen Bedingungen sind die Entwicklung von phytotoxischen Stoffen, Schädlingsbefall und Pilzkrankheiten an Wurzeln und Pflanzen, Abfällen von Blättern, Absterben von Pflanzenteilen und Pflanzen.

Besonders bei Kübelpflanzen ist oft das Pflanzgefäss zu klein und der Pflanze steht zu wenig Wurzelraum zur Verfügung. Bei normalem Giessen von oben tritt Oberflächenverschlämmung auf, das Pflanzsubstrat (Erde) wird schwer benetzbar, und das Giesswasser läuft grossenteils zwischen Pflanzgefäss und -substrat ab, ohne in das Substrat einzudringen. In der Folge treten Nährstoff- und Wassermangel und damit Wachstumsdepressionen, Blattfall, Schädlingsbefall und Krankheiten wegen verminderter Widerstandsfähigkeit und Absterben von Pflanzenteilen und ganzen Pflanzen auf.

Pflanzgefässe aller Art verfügen meist über sogenannte Wasserabzuglöcher, damit übermässiges Giesswasser, das meistens Nährstoffe aufgenommen hat, abfliessen kann. Einerseits hat dies Nährstoffverluste zur Folge, andererseits werden Fassaden und Böden durch das ablaufende, unsaubere Wasser verschmutzt.

Für die kontrollierte oder sparsame Bewässerung sind folgende Systeme bekannt:
- reservoirbildende Einsätze;
- kapillare Dochte, Matten, Vliese usw.;
- Tröpfchenbewässerung;
- von oben steckbare Wasserbehälter, wobei der ins Pflanzsubstrat eingesteckte Teil porös ist, um den Wasseraustritt zu ermöglichen, und sich der Wasservorrat in einem Behälter oberhalb dieses Teils oder nur im Einsteckteil selber befindet.

Weiter bestehende Nachteile dieser Systeme sind:
- unregelmässige Feuchtigkeitszufuhr;
- keine oder schlechte Belüftung des Wurzelballens;
- Verstopfung und/oder Verschlämmen nach längerem Gebrauch der kapillaren Systeme (Dochte, Vliese, gebrannte Tone [zu feinporig]), insbesondere durch kalkhaltiges Wasser und Ausblühungen;
- Aufwendige Produktion und komplizierte Anwendung; Unvorteilhaftes Design;
- aufwendige Logistik;
- ungünstiges Preis-/Leistungsverhältnis.

Die US-6,079,156 beschreibt ein System, in dem unter einem Pflanzengefäss ein weiteres Gefäss angeordnet wird. Vorratswasser wird aus dem Gefäss über ein System von kapillaren Leitern in das Pflanzengefäss gefördert. Um das Wasser durch Wasserablauflöcher in das Pflanzengefäss zu fördern, werden kegelförmige Körper verwendet, die auf dem kapillaren System stehen und deren Spitze in das Aussere des Pflanzengefässes ragt.

Nachteilig an diesem System ist die Komplexität durch eine Anzahl spezieller Teile und die Notwendigkeit eines zusätzlichen Gefässes für das Wasser.

Die DE-A-35 10513 betrifft ein Bewässerungssystem für Bonsaipflanzen. Das Pflanzengefäss besteht aus einem speziellen Übertopf, der innen mit saugfähigem Material ausgekleidet ist, und dem eigentlichen Kulturgefäss mit Pflanzensubstrat und Pflanze. Die Schicht aus saugfähigem Material weist einen Vorsprung auf, der durch ein Loch im Boden des Kulturgefässes ragt und in Kontakt mit dem Pflanzensubstrat steht. Dadurch kann Wasser über den Vorsprung durch kapillaren Transport in das Pflanzensubstrat gelangen.

Nachteilig ist auch hier wieder, dass spezielle Gefässe, namentlich der Übertopf, nötig sind.

In beiden Schriften wird auch allenfalls eine Versorgung der Pflanze durch Wasser angestrebt, die Frage der Belüftung und der Verdichtung des Wurzelballens jedoch nicht beachtet.

Es ist daher eine Aufgabe der vorliegenden Erfindung, einen Formkörper zur Verbesserung der Kultivierungsbedingungen von Pflanzen anzugeben, der eine verbesserte Versorgung von Wurzeln, insbesondere mit Wasser und/oder Luft, auch in verdichtetem Wurzelwerk gestattet.

Eine weitere Aufgabe besteht darin, den Formkörper so auszubilden, dass er mit bekannten Pflanzgefässen kombinierbar ist.

Die erstgenannte Aufgabe wird mit den Formkörpern gemäss Ansprüchen 1 und 8 gelöst. Die weiteren Ansprüche geben bevorzugte Ausführungsformen an, von denen wenigstens eine auch die zweite Aufgabe erfüllt.

Ein Hauptaspekt der Erfindung besteht darin, in einem Pflanzgefässes einen Formkörper anzuordnen. Der Formkörper weist eine bevorzugt kegelförmige Erhebung auf, die sich ins Innere des Pflanzgefässes, d.h. in das Pflanzsubstrat und damit in den Wurzelballen hinein, erstreckt. Am höchsten Ort der Erhebung und/oder an deren Mantel sind Öffnungen vorhanden, um Wasser oder Luft vom Inneren des Formkörpers nach aussen in das Pflanzsubstrat übertreten zu lassen. Am unteren Ende der Erhebung befindet sich die Basis, die im wesentlichen als eine Fläche oder Platte ausgebildet ist, die sich in etwa senkrecht zur Erhebung erstreckt. Bei einer kegelförmigen Erhebung kann die Basis beispielsweise als Ring ausgebildet werden, der am Fuss der Erhebung anschliesst. Auf der anderen Seite der Basis, z. B. am Rand, ist eine Lippe vorhanden, die ein Gebiet auf dieser Seite der Basis in der Art einer Mauer und damit eine Vertiefung auf dieser Seite der Basis begrenzt.

Im einfachsten Fall ähnelt der Formkörper somit einem Sombrero, wobei die Basis am Rand einen nach unten vorstehenden Kragen aufweist.

In der alternativen Ausführung gemäss Anspruch 8 wird die Bewässerung nahe der Oberfläche gefördert, indem die kegelförmige Erhebung zur Spitze hin wenig oder gar nicht wasserdurchlässig ist, dagegen am unteren, weiteren Ende wasserdurchlässig und/oder mit Löchern versehen ist. Dieser Körper ist vorgesehen, von oben mit der Spitze nach unten in dem Pflanzsubstrat eingeordnet zu werden, wodurch die Spitze ein Wasserreservoir bildet, während am unteren Ende der Erhebung, also nahe der Oberfläche des Pflanzsubstrats, Wasser austreten kann.

Alternativ oder zusätzlich ist der Formkörper aus einem wasserdurchlässigen Material, z. B. Ton, hergestellt, so dass ein Flüssigkeitsaustausch durch das Material hindurch und innerhalb des Materials möglich ist.

Die Kegelform bietet sich an, da ein solcher Formkörper mit der Spitze voran in das Pflanzsubstrat eingedrückt werden kann. Der Formkörper ist wenigstens in dem Einsteckteil, der in das Pflanzsubstrat eingeführt wird, hohl oder besteht aus Material, das Flüssigkeit aufnehmen und weiterleiten kann, z. B. durch Kapillareffekt. Dieser Innenraum ist auch nach Einstecken des Formkörpers zum Zwecke der Wasserzufuhr von aussen zugänglich.

Die Erfindung soll weiter an Ausführungsbeispielen unter Bezugnahme auf Figuren erläutert werden. Es zeigen:
- Fig. 1:: Schnitt durch ein Pflanzgefäss mit einem Formkörper;
- Fig. 2:: Schnitt durch ein Pflanzgefäss, das auf einen Formkörper aufgesteckt ist;
- Figg. 3 - 12:: verschiedene Ausführungsformen des Formkörpers im Schnitt;
- Figg. 13-15:: Formkörper zum Einstecken von oben im Schnitt;
- Fig. 16:: Siebeinsatz im Schnitt
- Fig. 17:: Schnitt durch ein Pflanzgefäss mit Formkörper am Boden und von oben eingesteckt;
- Fig. 18:: Ansicht eines Pflanztopfs mit einer Giesshilfe; und
- Fig. 19:: Pflanzgefäss mit integriertem Formkörper im Schnitt.

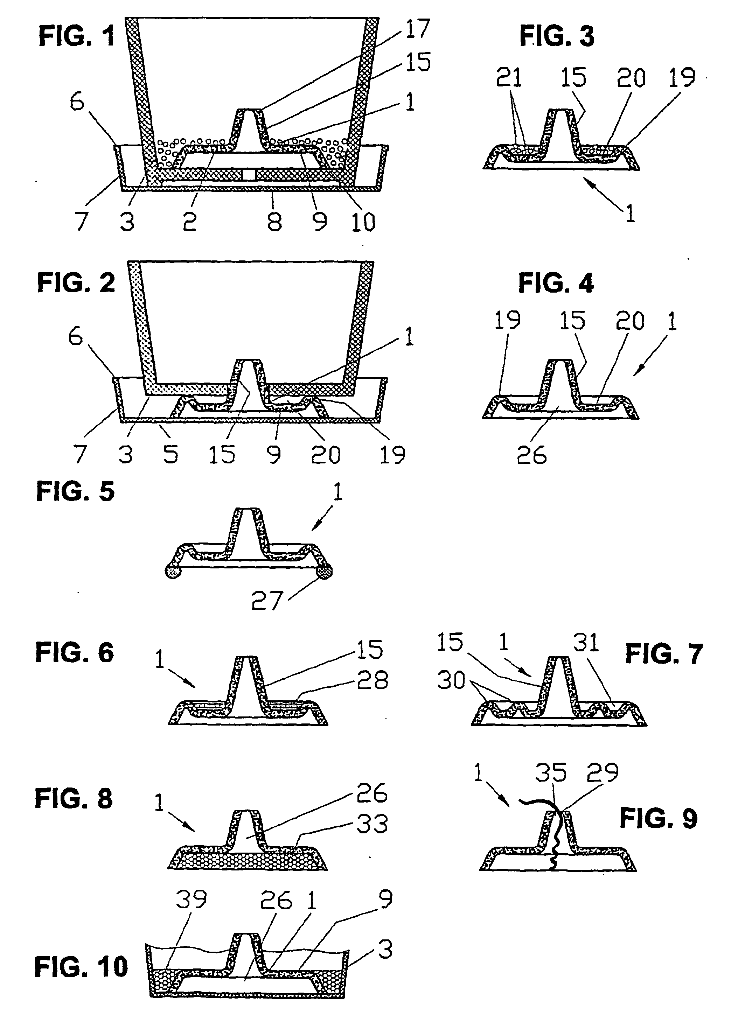

Figuren 1 und 2 zeigen einen erfindungsgemässen Formkörper 1 einmal als Einsatz 2 in einem Pflanztopf 3 (Fig. 1) und als Unterlage 5. In beiden Fällen befindet sich der Pflanztopf 1 in einem Untersatz 7. In Fig. 1 ist die im wesentlichen ringförmige Basis 9 des Formkörpers 1 mit einem porösen Granulat 10 abgedeckt..Solche Granulate sind an sich für Pflanzzwecke bekannt. Die Granulatschicht ist dabei etwas höher als die Oberkante des Untersatzes 7. Das (nicht dargestellte) Erdreich mit dem Wurzelballen darin kann daher nicht direkt mit einem Wasserspiegel im Pflanztopf in Kontakt kommen, da der maximale Pegel durch die Oberkante 6 des Untersatzes 7 vorgegeben ist. Der Wasseraustausch mit dem Untersatz 7 erfolgt über das Wasserabzugloch 8.

Kennzeichnend ist der in das Erdreich hineinragende Kegel 15. Er weist an der Spitze und/oder seitlich nahe der Spitze 17 Öffnungen auf. Über diese Öffnungen kann Luft und/oder Wasser aus dem Inneren des Kegel 15 dem Wurzelballen nahe seinem Zentrum zugeführt werden, aber auch überschüssiges Wasser abgeführt werden.

Der Formkörper 1 besteht zudem aus einem porösen, wasserleitenden Material. Durch Kapillarkräfte wird daher Wasser zur Spitze geleitet, und es können sowohl Wasser wie auch Luft über die Wand des Kegels 15 wie auch die Basis 9 ausgetauscht werden. Der Formkörper weist damit auch eine gewisse Kapazität zum Speichern des Wassers und von Nährstoffen auf.

Besonders geeignet ist ein möglichst poröser, gebrannter Ton als Material für den Formkörper 1.

In Versuchen wurde festgestellt, dass bei zu geringer Porosität das Material des Formkörpers durch Ablagerungen in relative kurzer Zeit wasserundurchlässig wird. Abgesehen von Ablagerungen von Kalk können sich auch Zusätze zum Giesswasser wie Nährstoffe ablagern. Eine hinreichend hohe Porosität gewährleistet damit die Funktion des Formkörpers über längere Zeiträume. Massnahmen zum Einstellen der Porosität sind dem Fachmann an sich bekannt.

Der einfache Formkörper 2 ist prinzipiell auch für das Aufstecken von unten auf einen Pflanztopf 3 geeignet. Der in Figg. 2 und 3 dargestellte Formkörper 5 weist am Umfang der Basis 9 zusätzlich eine ringförmige Erhebung 19 auf, wodurch eine ringförmige Wanne 20 um den Kegel 15 herum entsteht. Diese Wanne bildet ein erstes Wasserreservoir, das sogar für die Wurzeln direkt zugänglich ist. Überschüssiges Wasser kann einfach aussen am Kegel 9 abfliessen, wird in der Wanne 20 zunächst aufgefangen und kann dosiert in den Topf 3 zurückfliessen.

Der Untersatz kann auch als Wanne im Inneren des Pflanzgefässes angeordnet und der Formkörper auf diese Wanne gestellt sein.

Insgesamt wurden folgende Vorteile erreicht:
- grössere Pflegesicherheit;
- keine Fäulnis im unteren Wurzelbereich;
- keine Nährstoffauswaschung dank Wasser- und Nährstoffspeicher, u. a. im wasserspeichernden Kegel 9;
- bessere Wurzelverteilung im Wurzelballen (Topfballen) durch gleichmässige Wasser- und Nährstoffverteilung, insbesondere über die Spitze des Kegels 9;
- kein zusätzliches Abdecken der Abzuglöcher am Boden der Pflanztöpfe (z. B. durch Tonscherben) nötig;
- besseres Wachstum der Wurzeln und Pflanzen;
- Formkörper zur Aufbewahrung stapelbar;
- längere Umtopf- und Giessintervalle.

Es sollen nun einige vorteilhafte Varianten und Anwendungsarten des Formkörpers angegeben werden:

Gemäss Figur 3 kann in die Wanne 20 ein Granulat 21 oder ein anderes saugfähiges Material eingelegt werden. Wie Figur 4 zeigt, wirkt auch der Raum 26 unter dem Formkörper 1 als Wasserreservoir. Hier kann z. B. eine Nährstoffbatterie eingelegt werden, so dass eine kontinuierliche, lang andauernde Nährstoffzufuhr erfolgt. Fig. 5 zeigt eine dritte Variante, in denen am Rand der Basis ein elastischer, wasserdurchlässiger Reifen oder Ring 27, z. B. in Form eines Schwamms, vorgesehen ist. Er verhindert, dass Granulat oder Erde in das Reservoir unter dem Formkörper eindringt. Gleichzeitig wird überschüssiges Wasser sofort in den Formkörper 1 überführt.

Die Figg. 6 und 7 zeigen Ausführungen mit zunehmend höherem Kegel 15. Dadurch kann auch bei hohen Pflanzgefässen weit ins Innere vorgestossen und dort Luftzufuhr und Bewässerung sichergestellt werden. Andererseits ist jedoch durch Auslegung und Materialwahl der zunehmenden Bruchgefahr des Kegels, insbesondere an der Spitze, zu entgegnen.

In der Ausführung gemäss Fig. 6 ist ein Vlies oder eine Bewässerungsmatte 28 auf die Basis 9 aufgelegt. Insbesondere bei Formkörpern aus Kunststoff oder allgemein einem nicht kapillaren Material ist das nötig, um eine Wasserführung von der Basis zur Kegelspitze zu gewährleisten. In Fig. 7 weist die Basis 9 zwei ringförmige Erhebungen 30 auf. Sie ergeben eine bessere Auflage für ein auf den Formkörper 1 aufgestecktes Pflanzgefäss und bilden zugleich ein Wasserreservoir 31, das etwas kleiner als in Fig. 2 ist.

In Fig. 8 ist in den Hohlraum 26 ein Schwamm 33 zum Zurückhalten des Wassers eingelegt. Die Ausführung gemäss Fig. 9 weist in der Kegelspitze eine grössere Öffnung 35 auf, durch die z. B. ein Docht 29, ein kapillares, saugfähiges Kunststoffteil oder ein Schwamm (nicht dargestellt) gesteckt werden kann, um das Wasser zu transportieren.

Gemäss Fig. 10 kann im Zwischenraum 38 zwischen Basis 9 und der Wand des Pflanzgefässes 3 ein kapillarer Formkörper 39, z. B. ein Schwamm, eingelegt werden, um Wasser zu speichern und zu verhindern, dass Erde in das Reservoir (die "Nasszone") gelangt. Der kapillare Körper kann auch unter dem Rand des Formkörpers angeordnet sein. Er bewirkt dann eine Abdichtung des Innenraums 26, so dass insbesondere Wasser aus dem Pflanzsubstrat langsamer entweicht. Ausserdem verbessert der kapillare Körper die Transport- und Lagereigenschaften, da er die Unterkante des Formkörpers gegen Schlag polstert.

Der Formkörper selbst besteht bevorzugt aus einem hochporösen, gebrannten Ton, der eine relativ hohe Wassertransportfähigkeit, -durchlässigkeit und -speicherkapazität aufweist. Wichtige Parameter für die Eigenschaften des Tonmaterials sind Brenndauer, Brennverfahren und Brenntemperatur. Das Material des Formkörpers, insbesondere Ton, kann zusätzlich mit Porosierungmittel wie Perlit, Bims, Holzstaub oder Sägemehl versetzt sein, um die Porosität zu erhöhen. Denkbar sind z. B. auch Tone mit hoher Kationenaustauschkapazität wie Zeolithe, insbesondere um Nährstoffe zu speichern und über längere Zeiträume wieder abzugeben.

Der Formkörper kann jedoch auch aus weniger porösem Ton, wie z. B. für Blumentöpfe üblich, bestehen, aber auch aus Kunststoff. Insbesondere im letzteren Fall müssen die Formkörper auf jeden Fall Durchtrittslöcher für Wasser und Luft aufweisen. In der Regel ist bei den hochporösen Formkörper eine zusätzliche Duchgangsmöglichkeit durch Öffnungen nahe der Spitze des Kegels nur für die Belüftung nötig.

Insbesondere bei Verwendung von Kunststoff kann die Oberfläche und/oder die Unterseite, d. h. im wesentlichen Innenraum 26 der Basis, einschliesslich der Innenseite des Kegels mit einer wasserleitenden Auflage versehen sein, um Wasser zum Kegel und an diesem entlang transportieren zu können. Es kann sich dabei um eine aufgeklebte Matte handeln, aber auch aufgesprühtes Material ist denkbar.

Anstelle des Kegels kann auch an andere Formen von Erhebungen gedacht werden. Bevorzugt weisen sie jedoch eine gewisse konische Form auf, um in das Pflanzsubstrat eingesteckt werden zu können. Die konische Form führt auch zur Stapelbarkeit und kann als Haltegriff zum Einsetzen in und Entnehmen aus Pflanzgefässen dienen.

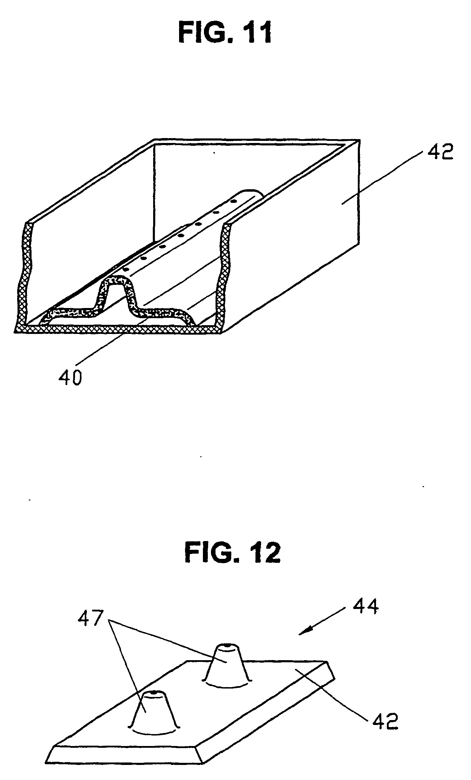

Fig. 11 zeigt eine langgestreckte Ausführung 40, die für den Einsatz in rechteckigen Pflanzkästen 42 besonders geeignet ist.

Der Formkörper 40 kann statt separater Körper auch als integrierter Bestandteil des Kastens 42 ausgeformt sein, d. h. der Formkörper stellt zugleich den Boden des Kastens 42 dar.

Fig. 12 zeigt eine neunte Ausführung 44 mit rechteckiger Basis 45, auf der zwei Kegel 47 ausgebildet sind. Diese Ausführung ist besonders für den Einsatz mit Bonsaipflanzgefässen gedacht und erlaubt, den hohen Aufwand für die Pflege zu reduzieren. Gleichzeitig wird die Sicherheit gegen zu wenig oder zu viel Giessen erhöht, wogegen gerade Bonsaipflanzen sehr empfindlich sind.

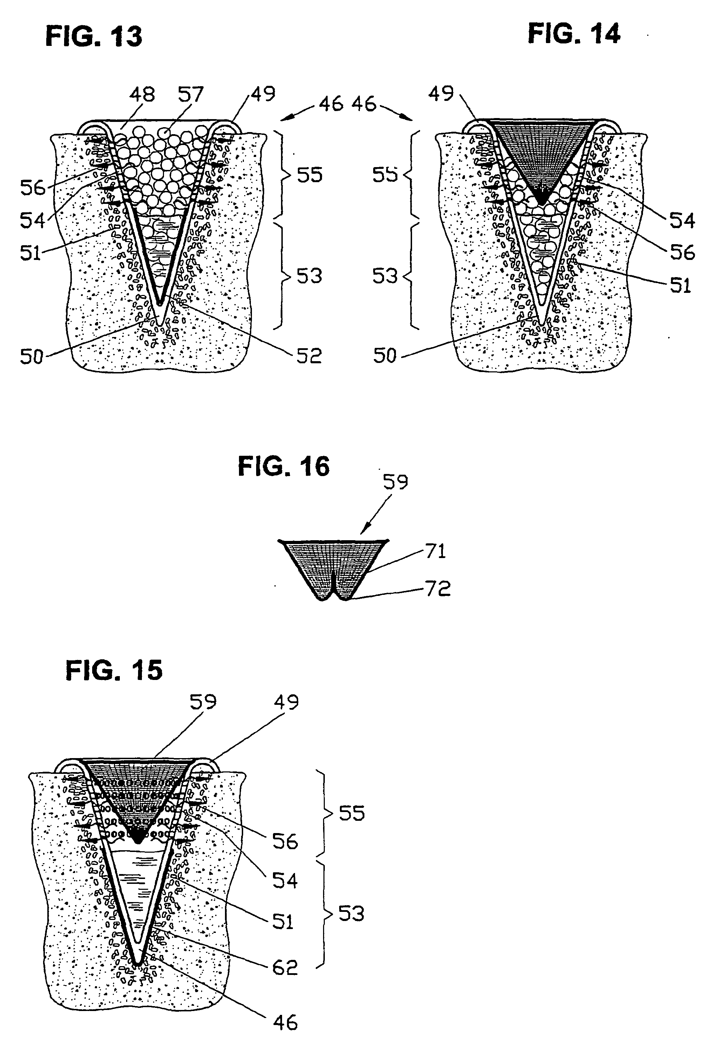

Fig. 13 zeigt eine zehnte Ausführungsform eines Formkörpers 46, der zum Einstecken von oben in das Pflanzsubstrat ausgelegt ist. Er besteht im wesentlichen aus einem Kegel 48 mit einem Kragen 49. Der Kegel 48 ist von der Spitze 50 her etwa bis zur Mitte im Bereich 53 wenig bis nicht wasserdurchlässig, um ein Wasserreservoir zu bilden. Da er im Beispiel aus Ton besteht, ist ein wasserundurchlässiger Einsatz 52, z. B. aus Kunststoff, in den unteren Teil 53 eingesetzt. Denkbar ist auch eine wasserdichte oder wasserhemmende Beschichtung. Die Abdichtung kann sich auch über die gesamte Innen- und/oder Aussenfläche des Formkörpers 46 erstrecken. Bevorzugt ist eine Mindesthöhe von einem Viertel der Höhe des Formkörpers 46. Weist sie eine grössere Höhe als z. B. drei Viertel der Erhebung auf, bzw. erstreckt sich über die gesamte Höhe des Formkörpers, muss sie im oberen Bereich Durchlässe 54 aufweisen, um den Wasseraustausch zu erlauben. Grundsätzlich erlauben es die Durchlässe 54, Giesswasser, das nicht vom Reservoir im unteren Teil 53 aufgenommen wird, direkt in das umgebende Pflanzsubstrat zu verteilen. Sie sind daher unabhängig vom Material des Formkörpers bei dieser Anwendung als Giesshilfe von Vorteil.

Der Formkörper kann auch aus dem üblichen, relativ niedrig porösen, gebranntem Ton bestehen, da dieser in relativ kurzer Zeit verstopft und damit im Sinne der Erfindung hinreichend wenig wasserdurchlässig wird. Der Wasseraustausch zwischen Reservoir und Pflanzsubstrat geschieht über einen Transport des Wassers im Reservoir durch kapillare Kräfte (Granulatfüllung 48; kapillares Wandmaterial) in den wasserdurchlässigen Teil. Dort steht Pflanzsubstrat, bevorzugt jedoch kapillares Granulat 51, in möglichst direktem Kontakt mit dem kapillaren Material des Formkörpers selbst oder in seinem Inneren, um den Wasseraustausch zu ermöglichen. Der Formkörper 46 wird daher für eine optimale Wirkung in Granulat 51 eingebettet.

Wie erwähnt ist es denkbar, das Dichtmittel aussen anzubringen, wodurch das kapillare Material des Formkörpers 46 auch den Wassertransport vom Reservoir im unteren Teil 53 zum Austauschbereich im oberen Teil 55 übernehmen kann (s. u., Fig. 15). Bei dieser Ausführung kann vorteilhaft aussen eine wasserundurchlässige Hülle oder Schicht 62 vorgesehen werden, um ein Austreten von Wasser im unteren Bereich des Formkörpers zu verhindern und dadurch die Befeuchtungswirkung durch Wasseraustritt im oberen Bereich länger aufrecht zu erhalten.

Der Formkörper kann auch in Gänze aus einem wenig bis nicht wasserdurchlässigen Material bestehen, z. B. einem Kunststoff. In diesem Fall sind die Öffnungen 54 vorzusehen oder andere Massnahmen zu treffen, um im oberen Teil 55 einen Flüssigkeitsaustausch zu gewährleisten, wobei normales Tonmaterial oder ähnlich feinporöses Material in der Regel eine zu geringe Durchlasskapazität aufweist und diese in kurzer Zeit u. a. durch Verschlämmen und Kalkablagerungen weiter verringert wird.

Wie in Fig. 14 am Beispiel einer elften Ausführungsform dargestellt, wirkt damit der wasserundurchlässige untere Teil 53 als Reservoir, während im oberen Teil 55 Wasser durch Öffnungen 54 (bei gut gefülltem Formkörper) und/oder durch das wasserdurchlässige Material des Formkörpers 46 gemäss Pfeilen 56 austreten kann. Der Wassernachschub erfolgt durch Kapillarkräfte, wenn der Wasserspiegel unter die Grenze zwischen wasserdurchlässigem und -undurchlässigem Teil gesunken ist. Der Formkörper 46 ist dafür mit einem porösen, kapillaren Granulat 57 gefüllt.

Damit ist der Wasserverbrauch verringert und die Bewässerung ist noch über einen längeren Zeitraum gegeben. Zur Unterstützung der Bewässerung in dieser Phase ist es denkbar, kapillare Systeme (Docht, Schwamm) vorzusehen, die z. B. von der Spitze 50 durch die Öffnungen 54 reichen.

Diese elfte Ausführungsform weist einen erhöhten Rand 58 auf, um das Hineinschwemmen von Pflanzsubstrat aus der Umgebung beim Giessen zu verhindern. Zusätzlich weist das Innere einen trichterförmigen Siebeinsatz 59 auf, der ebenfalls eine Verunreinigung verhindern soll, aber auch die Wasserspeicherkapazität erhöht, da sich im Inneren ein Raum frei von Granulat befindet.

Fig. 15 zeigt eine Variante, in der der ganze Formkörper aus einem porösen Körper besteht. Das Wasser im unteren Bereich wird dann von den Wänden des Formkörpers 46 nach oben zu dem wasserdurchlässigen Teil 55 geleitet, so dass auf eine Füllung mit einem kapillaren Material verzichtet werden kann. Denkbar ist bei dieser Ausführung auch, ein hochporöses Material zu verwenden, so dass Wasser auch im unteren Bereich aus dem Formkörper in das Pflanzsubstrat übertreten kann und, insbesondere wenn wie dargestellt eine äussere Hülle 62 vorhanden ist, der Wassertransport in den oberen Teil 55 besser ist. Um den Eintrag von Fremdkörpern (Pflanzsubstrat, Blätter, usw.) zu verhindern, ist in der Öffnung des Formkörpers ein Siebeinsatz 59 angeordnet.

Bemerkenswert ist der alternative Siebeinsatz 70, der zur Verdeutlichung in Fig. 16 isoliert dargestellt und anstelle des Siebeinsatzes 59 verwendbar ist: Er weist in der Mitte eine Erhebung 71 auf, wodurch ein kreisförmiger Rand 72 entsteht. Die Erhebung 71 kann als Griff zum Herausnehmen aus dem Formkörper 46 dienen, der kreisförmige Rand 72 erlaubt das Aufstellen auf einer Unterlage. Insgesamt wird durch diese Form auch die Stapelbarkeit deutlich verbessert.

Zur Verringerung der Verdunstung und die gleichmässigere Feuchtigkeitsabgabe können die Formkörper 46 mit Tongranulat, wie für die Hydrokultur bekannt, oder anderem, insbesondere wasseraufsaugendem, Material gefüllt werden.

Insgesamt wirken diese oben in das Pflanzsubstrat eingesteckten Körper auflockernd und stellen eine Giesshilfe dar, indem sie das Giesswasser direkt in das Pflanzsubstrat einleiten, aber auch kurzfristig speichern und an das umgebende Erdreich nachhaltig abgeben. U. a. wird dadurch verhindert, dass das Giesswasser oberflächlich abfliesst, und durch Herabrinnen an der Oberfäche des Formkörpers zur Spitze 50 wird Wasser ins Innere des Pflanzsubstrats und des Wurzelballens geleitet.

Diese Ausführung bietet u. a. die folgenden Vorteile:
- vereinfachtes Giessen bei verdichtetem Wurzelballen;
- längere Giessintervalle;
- harmonischere Wasserverteilung;
- zusätzliche Wasserspeicher in der Kegelspitze;
- optimale Düngewirkung (auch als Langzeitdüngeeinsatz verwendbar);
- zusätzliche Belüftung von oben selbst bei verschlämmter und/oder verkrusteter Oberfläche des Pflanzsubstrats;
- einfache Handhabung;
- günstiges Preis-Leistungs-Verhältnis, einfache Herstellung;
- besseres Wachstum;
- Synergie in Verbindung mit einem reservoirbildenden Untersatz und Formkörpern zur Bewässerung und Belüftung von unten, insbesondere in einer der Ausführungen gemäss Figg. 1 bis 12;
- praktisch unsichtbar.

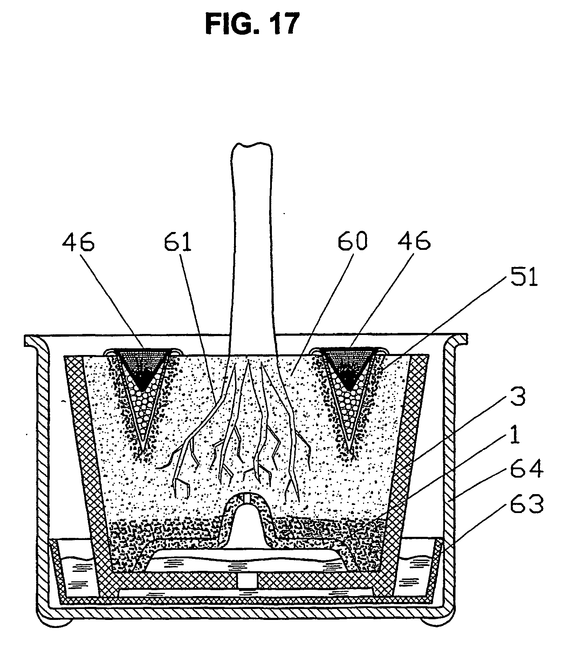

Fig. 17 zeigt einen Schnitt durch ein Pflanzgefäss 3 mit einem Formkörper 1, der unten in den Topf 3 eingelegt ist und vom Pflanzsubstrat 60 überschichtet ist, und zwei von oben eingesteckte Formkörper 46. Durch die verbesserte Belüftung und Bewässerung ergibt sich ein gleichmässigeres, insbesondere auch mehr zum Zentrum des Pflanzgefässinhalts gerichtetes Wachstum der Wurzeln 61. Das Pflanzgefäss 3 steht in einer Schale 63, welche wiederum in einem Übertopf 64 steht.

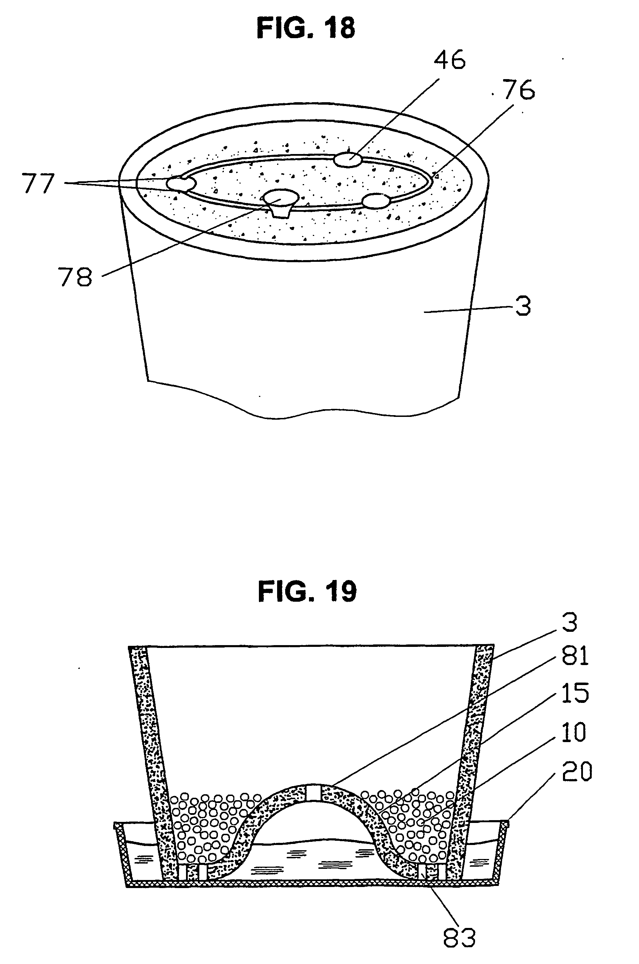

Fig. 18 zeigt eine Giesshilfe 76 zur Verwendung mit von oben eingesteckten Formkörpern 46. Sie weist Anschlüsse 77 auf, an denen Formkörper 46 angesetzt werden können. Die Giesshilfe 76 ist aus einem elastischen Material, so dass die Formkörper 46 in einer Anordnung wie von der Giesshilfe 76 vorgegeben auf die Oberfläche des Pflanzgefässinhalt aufgestellt werden können. Sie werden dann nacheinender, eventuell in mehreren Durchläufen, in den Gefässinhalt eingedrückt. Das Giessen erfolgt über den Trichter 78, der hier auch direkt über einem Formkörper 46 angeordnet ist. Das Giesswasser gelangt ohne Mühe zugleich in die anderen Formkörper 46.

Insbesondere mit der Giesshilfe sind die Formkörper 46 auch im Freiland einsetzbar.

Für eine weiter verbesserte Wirkung sind die Formkörper 46 mit einer Schicht kapillaren Granulats 51 umgeben, um das austretende Wasser besser zu verteilen und einer Verschlämmung zusätzlich entgegenzuwirken.

Fig. 19 zeigt schliesslich noch ein Pflanzgefäss 3, in dem der Formkörper als geformtes Teil 81 in Form der Erhebung 15 in das Pflanzgefäss integriert ist. Die abgerundete, an einen Iglu erinnernde Form ist dabei u. a. technisch durch die Herstellung des Pflanzgefässes aus Ton bedingt. Am Boden weist das Gefäss Wasserabzugslöcher 83 auf.

In der dargestellten Ausführung ist der erfindungsgemässe Formteil auf die Erhebung 15 reduziert. Denkbar ist jedoch, den Formteil z. B. im wesentlichen gemäss einem Ausführungsbeispiele der Figg. 1 und 3 bis 11 auszubilden.

Die Erhebung 15 ist bevorzugt 1/5 bis 1/4 und höchstens 1/2 so hoch wie die Füllhöhe des Pflanzgefässes. Bei Bonsaikulturen, bei denen flache Pflanzgefässe verwendet weden, liegt die Höhe der Erhebung(en) eher an der oberen Grenze oder kann sogar grösser sein.

Zusammenfassend sorgt die Erhebung 15, die bevorzugt etwa kegel- oder pyramidenförmig ist und in den Wurzelballen von oben und/oder von unten hineinragt, sowohl an der Oberfläche bzw. am Gefässboden als auch im Inneren für eine harmonische Versorgung des Wurzeln mit Feuchtigkeit, aber auch mit Nährstoffen und mit Luft. Daher empfehlen sich die erfindungsgemässen Formkörper insbesondere für sogenannte Biokulturen (biologisch stark belebte Substrate mit hohem Sauerstoffbedarf) und Hydrokulturen, in denen die Formkörper zusätzlich die üblichen Wasserabzuglöcher am Boden der Pflanzgefässe abdecken und damit ein Herauswachsen der Wurzeln verhindern können.

Anhand der vorangehenden Beispiele sind dem Fachmann eine Vielzahl Abwandlungen zugänglich, ohne den Bereich der Erfindung wie in den Ansprüchen definiert zu verlassen. U. a. ist denkbar:
- Herstellung der Erhebung oder des ganzen Formkörpers aus kapillarem Hartschaum, der bevorzugt an der Oberfläche mit einem feinmaschigen Vlies versehen ist, um das Einwachsen von Wurzeln zu verhindern.
- Verstärken der Spitze des Kegels mit einer Kappe aus rostfreiem Stahl oder Kunststoff, um damit den Boden eines Kunststoffpflanztopfes durchstechen zu können.
- Umgebender Ausgleichsring (Fig. 10) aus Schwamm, z. B. aus Polyurethan.
- Anstelle eines an der Kegelspitze austretenden Dochts wird ein flexibles Formstück aus Polyurethanschaum verwendet.
- Formkörper mit eingelagerten Nähr- und Wirkstoffen, um eine langandauernde Abgabe dieser Stoffe zu bewirken.
- Pflanzgefäss mit im Boden integriertem Formkörper, z.B. gemäss Fig. 19, mit mehr als einem integrierten Formkörper (81).
- Formkörper zum Einbetten in das Pflanzsubstrat mit anderer Form der Erhebung, z. B. mit im wesentlichen zylindrischer und/oder in der Mitte aufgeweiteter Form, um ein vergrössertes Reservoir bei der Verwendung als Giesshilfe zu bilden.
- Siebeinsatz (59) mit einem verbreiterten Rand, der den Rand des Formkörpers abdeckt: Insbesondere bei Formkörpern aus kapillarem Material wird damit eine Befeuchtung und Verdunstung am oberen Rand des Formkörpers und damit die Bildung von Mikroflora (Algen usw.) verhindert.

## Patentansprüche

1. Formkörper (1, 40, 44, 46) zur Verbesserung der Kultivierungsbedingungen von Pflanzen, der mindestens eine Erhebung (15) aufweist, wobei sich die Erhebung von ihrem Fuss ausgehend insgesamt verjüngt, so dass der Formkörper in ein Pflanzsubstrat in einem Pflanzgefäss mit der Erhebung voran hineinragend angeordnet, insbesondere eingesteckt oder eingebettet werden kann, wobei die Erhebung wenigstens zu einem wirksamen Teil aus einem wasserdurchlässigen kapillaren Material besteht und/oder Löcher aufweist und/oder mit einer wasserleitenden Auflage versehen ist, so dass Stoffe, wie insbesondere Luft und Wasser, über die Erhebung mit dem Inneren des Pflanzsubstrats austauschbar sind, um eine verbesserte Belüftung und/oder Bewässerung und/oder Düngung im Inneren des Pflanzsubstrats und insbesondere im Wurzelballen einer Pflanze bewirken zu können; die Erhebung auf einer Basis (9; 49) steht; und die Basis (9; 49) auf der der Erhebung (15) abgewandten Seite eine Vertiefung (26) aufweist, die mit der Erhebung für einen Flüssigkeitsaustausch in Verbindung steht, so dass die Vertiefung als Wasserreservoir wirkt, insbesondere zusätzlich zur Aufnahme eines wasseraufnehmenden oder wasserleitenden Materials oder einer Nähr- und Wirkstoffquelle geeignet ist.

2. Formkörper (1, 40, 44, 46) gemäss Anspruch 1, **dadurch gekennzeichnet, dass** er insgesamt aus einem wasserdurchlässigen Material, bevorzugt aus Ton und insbesondere bevorzugt aus einem hochporösen Ton besteht.

3. Formkörper (1, 40, 44, 46) gemäss Anspruch 2, **dadurch gekennzeichnet, dass** das wasserdurchlässige Material Porosierungsmittel und/oder flüssigkeitspeichernde Komponenten (15), insbesondere Zeolithe, in wirksamer Menge aufweist.

4. Formkörper (1, 40, 44, 46) gemäss einem der Ansprüche 1 bis 3, **dadurch gekennzeichnet, dass** in den Formkörper Nährstoffe und/oder Wirkstoffe einlagert sind, um eine Langzeitabgabe dieser Stoffe zu erhalten.

5. Formkörper (1, 40, 44, 46) gemäss gemäss einem der Ansprüche 1 bis 4, **dadurch gekennzeichnet, dass** wenigstens die Erhebung (15) aus einem polymeren, wasserdurchdringbaren Hartschaum besteht.

6. Formkörper (1, 40, 44, 46) gemäss einem der Ansprüche 1 bis 5, **dadurch gekennzeichnet, dass** wenigstens der höchste Punkt (17, 50) der Erhebung (15) mit einer Kappe aus widerstandsfähigerem Material, insbesondere Metall oder einem Kunststoff, abgedeckt ist, so dass mit der Erhebung dünner Kunststoff und Pflanzsubstrat im wesentlichen ohne Beschädigung der Erhebung (15) durchbohrbar ist.

7. Formkörper (1, 40, 44, 46) gemäss einem der Ansprüche 1 bis 6, **dadurch gekennzeichnet, dass** die Erhebung (15) im wesentlichen eine die Form eines massiven oder hohlen Kegels aufweist.

8. Formkörper (46) zur Verbesserung der Kultivierungsbedingungen von Pflanzen, der mindestens eine Erhebung (15) aufweist, die sich von ihrer Basis ausgehend verjüngt, so dass der Formkörper in ein Pflanzsubstrat in einem Pflanzgefäss mit der Erhebung voran hineinragend angeordnet, insbesondere eingesteckt oder eingebettet werden kann, wobei die Erhebung wenigstens zu einem wirksamen Teil aus einem wasserdurchlässigen kapillaren Material besteht und/oder im Innern Löcher aufweist und/oder mit einer wasserleitenden Auflage versehen ist, so dass Stoffe, wie insbesondere Luft und Wasser, über die Erhebung mit dem Inneren des Pflanzsubstrats austauschbar sind, um eine verbesserte Bewässerung und/oder Düngung im Inneren des Pflanzsubstrats und insbesondere im Wurzelballen einer Pflanze bewirken zu können, und die Erhebung von der Spitze (50) ausgehend zu einem wesentlichen Teil (53), insbesondere zu ca. mindestens einem Viertel und maximal zu drei Vierteln, im wesentlichen wasserundurchlässig und der übrige, obere Teil der Erhebung (48) wasserdurchlässig und/oder mit Öffnungen (54) versehen ist, so dass bei Einstecken in Pflanzsubstrat von oben der wasserundurchlässige Teil als Wasserreservoir für den Flüssigkeitsaustausch über den oberen Teil wirkt, um dem Abtrocknen der obersten Schicht des Pflanzsubstrats entgegenwirken zu können.

9. Formkörper (46) gemäss Anspruch 8, **dadurch gekennzeichnet, dass** die Erhebung von der Spitze (50) ausgehend zu einem wesentlichen, unteren Teil (53), insbesondere zu ca. mindestens einem Viertel, aussen und/oder innen mit einer wasserundurchlässigen oder wasserhemmenden Hülle (52) und/oder Schicht versehen ist und der übrige, obere Teil (55) der Erhebung (48) wasserdurchlässig und/oder mit Öffnungen (54) versehen ist, so dass nach Einstecken in Pflanzsubstrat von oben der untere Teil (52) ein Reservoir bildet.

10. Formkörper (46) gemäss Anspruch 9, **dadurch gekennzeichnet, dass** sich die Hülle (52) und/oder die Schicht im wesentlichen über die ganze Länge des Formkörpers ertreckt und im oberen Bereich des Formkörpers mit Durchbrechungen oder Durchlässen versehen ist, um die Wasserdurchlässigkeit zu erreichen.

11. Wasserleitvorrichtung (76) zur Verwendung mit einem Formkörper gemäss einem der Ansprüche 8 bis 10, im wesentlichen bestehend aus einer trichterartigen Einfüllhilfe (78) und einer damit verbundenen Leitung, die mit Verbindungsmitteln und an diesen mit Auslässen ausgestattet ist, so dass die Vorrichtung mittels der Verbindungsmittel an Formkörpern (46) anbringbar ist und von der Einfüllhilfe eine Flüssigkeit, insbesondere Wasser, zu den verbundenen Formkörpern leitbar ist.

12. Wasserleitvorrichtung gemäss Anspruch 11, **dadurch gekennzeichnet, dass** sie hinreichend biegsam ist, um beim Einstecken von Formkörpern (46) von oben in das Pflanzsubstrat in einem Pflanzgefäss mit ihnen verbunden zu bleiben.

13. Ein Pflanzgefäss (3), an dem mindestens ein Formkörper (81) gemäss einem der Ansprüche 1 bis 7 ausgebildet ist.

14. Ein Pflanzgefäss (3), an dessen Boden mindestens eine Erhebung (81) eines Formkörpers gemäss einem der Ansprüche 1 bis 7 ausgebildet ist, so dass der Boden des Pflanzgefässes im wesentlichen die Basis eines solchen Formkörpers bildet.

15. Pflanzenkulturanordnung mit einem Pflanzgefäss (3, 60) zur Aufnahme des Pflanzsubstrats und der Pflanze gemäss einem der Ansprüche 13 bis 14 und/oder mit mindestens einem am Boden des Pflanzgefässes oder unter dem Pflanzgefäss angeordneten Formkörper (1, 40, 44) gemäss einem der Ansprüche 1 bis 7, wobei die Erhebung (15, 81) des Formkörpers in das Innere des Pflanzgefässes ragt, um mittels des Formkörpers (1, 4, 40) einen Wasseraustausch und eine Belüftung im Pflanzgefässinneren zu gewährleisten.

16. Pflanzenkulturanordnung gemäss einem der Ansprüche 13 bis 15, **dadurch gekennzeichnet, dass** die Erhebung (15) wenigstens 1/5, bevorzugt mindestens 1/4 so hoch und weiter bevorzugt nicht höher als 1/2 so hoch wie die Füllhöhe des Pflanzgefässes (3, 60) ist.

17. Pflanzenkulturanordnung gemäss einem der Ansprüche 13 bis 16, **dadurch gekennzeichnet, dass** am Boden des Pflanzgefässes (3, 60) eine Schicht granuläres, bevorzugt wasserspeicherndes Material (10), insbesondere bevorzugt Tongranulat, vorhanden ist, die von einem wirksamen Teil der Erhebung (15, 81) überragt wird, um am Boden des Pflanzgefässes eine wasserspeichernde Zone zu bilden, wobei ein Flüssigkeitsaustausch zwischen der Zone und darüber geschichtetem Pflanzsubstrat durch die Erhebung bewirkt wird.

18. Pflanzenkulturanordnung gemäss Anspruch 17, **dadurch gekennzeichnet, dass** am Boden des Pflanzgefässes oder unter dem Pflanzgefäss eine Wanne (7, 20) angeordnet ist, deren Oberkante (6) als Überlauf wirkt, wodurch ein maximaler Pegel eines Wasserreservoirs unten im Pflanzgefäss vorgegeben ist, der niedriger ist als die Schütthöhe von wasserspeicherndem Material (10) unter dem Pflanzsubstrat, um direkten Kontakt zwischen Pflanzsubstrat und Wasser zu vermeiden.

19. Pflanzenkulturanordnung gemäss einem der Ansprüche 13 bis 18 und/oder mit mindestens einem zweiten Formkörper (46) gemäss einem der Ansprüche 8 bis 10, wobei der zweite Formkörper bevorzugt mit einer Wasserleitvorrichtung gemäss einem der Ansprüche 11 bis 12 verbunden ist.

## Claims

1. Moulded body (1, 40, 44, 46) for improving the cultivating conditions of plants, comprising at least one projection (15), the projection as a whole being tapered from its foot onwards, thereby allowing the moulded body to be arranged, more particularly thrust in or embedded with the projection first, in a plant substrate contained in a planting container, at least an effective portion of the projection consisting of a water-permeable capillary material and/or being provided with apertures and/or covered with a water-conducting layer, thereby allowing an exchange of substances, such as air and water in particular, with the interior of the plant substrate through the projection in order to enable an improved aeration and/or water supply and/or fertilizer supply in the interior of the plant substrate and particularly in the root ball of a plant; the projection standing on a base (9; 49); and the base (9; 49) comprising, on the side opposite the projection (15), a depression (26) communicating with the projection for a liquid exchange, so that the depression acts as a water reservoir and, particularly, is furthermore capable of receiving a water-absorbing or water-conducting material or a source of nutrients and additives.

2. Moulded body (1, 40, 44, 46) according to claim 1, **characterized in that** it is entirely made of a water-permeable material, preferably of clay, and more preferably of a highly porous clay.

3. Moulded body (1, 40, 44, 46) according to claim 2, **characterized in that** the water-permeable material comprises effective amounts of components (15), more particularly zeolites, for increasing the porosity and/or for storing liquids.

4. Moulded body (1, 40, 44, 46) according to one of claims 1 to 3, **characterized in that** nutrients and/or additives are incorporated in the moulded body in order to provide a long-term supply of such substances.

5. Moulded body (1, 40, 44, 46) according to one of claims 1 to 4, **characterized in that** at least the projection (15) consists of a polymeric, water-permeable rigid expanded plastics material.

6. Moulded body (1, 40, 44, 46) according to one of claims 1 to 5, **characterized in that** at least the apex (17, 50) of the projection (15) is covered by a cap of a more resistant material, more particularly metal or a synthetic material, thereby allowing thin synthetic materials and the plant substrate to be pierced substantially without damaging the projection (15).

7. Moulded body (1, 40, 44, 46) according to one of claims 1 to 6, **characterized in that** the projection (15) is essentially in the shape of a solid or hollow cone.

8. Moulded body (46) for improving the cultivating conditions of plants, comprising at least one projection (15) which is tapered from its foot onwards, thereby allowing the moulded body to be arranged, more particularly thrust in or embedded with the projection first, in a plant substrate contained in a planting container, at least an effective portion of the projection consisting of a water-permeable capillary material and/or being internally provided with apertures and/or covered with a water-conducting layer, thereby allowing an exchange of substances, such as air and water in particular, with the interior of the plant substrate in order to enable an improved water supply and/or fertilizer supply in the interior of the plant substrate and particularly in the root ball of a plant; the projection, starting from the apex (50), being essentially water-impermeable over a substantial portion (53) thereof, more particularly over about at least a quarter and over at most three quarters whereas the remaining, upper portion of the projection (48) is water-permeable and/or provided with apertures (54), so that when inserted in the plant substrate from above, the water-impermeable portion acts as a water reservoir for a liquid exchange through the upper portion in order to be able to counteract the drying of the uppermost layer of the plant substrate.

9. Moulded body (46) according to claim 8, **characterized in that** the projection is externally and/or internally provided on a substantial lower portion (53) near the apex (50), more particularly on at least approx. a quarter, with a water-impermeable or water-inhibiting envelope (52) and/or coating whereas the remaining upper portion (55) of the projection (48) is water-permeable and/or provided with apertures (54), so that the lower portion (52) forms a reservoir after its insertion in a plant substrate from above.

10. Moulded body (46) according to claim 9, **characterized in that** the envelope (52) and/or the coating extends over the essentially entire length of the moulded body and is provided in the upper area of the moulded body with apertures or outlets in order to achieve the water-permeability.

11. Water conducting device (76) for use with a moulded body according to one of claims 8 to 10, essentially consisting of a funnel-like filling aid (78) and a duct which is connected thereto and is provided with connecting means and with outlets thereon, thereby allowing the device to be attached to moulded bodies (46) by means of the connecting means, and a liquid, more particularly water, to be conducted by the filling aid to the connected moulded bodies.

12. Water conducting device according to claim 11, **characterized in that** it is sufficiently resilient to remain connected to the moulded bodies (46) while the latter are inserted in the plant substrate in a planting container from above.

13. A planting container (3) having at least one moulded body (81) according to one of claims 1 to 7 formed thereon.

14. A planting container (3) at the bottom of which at least one projection (81) of a moulded body according to one of claims 1 to 7 is formed, so that the bottom of the planting container essentially forms the base of such a moulded body.

15. Plant cultivating assembly comprising a planting container (3, 60) for receiving the plant substrate and the plant according to one of claims 13 to 14 and/or at least one moulded body (1, 40, 44) according to one of claims 1 to 7 disposed at the bottom of the planting container or below the planting container, the projection (15, 81) of the moulded body projecting into the interior of the planting container in order to ensure a liquid exchange and an aeration inside the planting container by means of the moulded body (1, 4, 40).

16. Plant cultivating assembly according to one of claims 13 to 15, **characterized in that** the height of the projection (15) is equal to 1/5, preferably to at least 1/4, and more preferably to no more than 1/2 of the filling height of the planting container (3, 60).

17. Plant cultivating assembly according to one of claims 13 to 16, **characterized in that** a layer of granular, preferably water-storing material (10), more preferably of granular clay is provided at the bottom of the planting container (3, 60), above which layer an effective portion of the projection (15, 81) extends, in order to create a water-storing zone at the bottom of the planting container, whereby a liquid exchange between that zone and the plant substrate disposed above it is ensured by the projection.

18. Plant cultivating assembly according to claim 17, **characterized in that** a trough (7, 20) is disposed at the bottom of the planting container or underneath the latter, the upper edge (6) of the trough acting as an overflow whereby a maximum level in a water reservoir at the bottom of the planting container is predetermined which is lower than the filling height of a water-storing material (10) below the plant substrate in order to avoid direct contact between the plant substrate and the water.

19. Plant cultivating assembly according to one of claims 13 to 18 and/or comprising at least a second moulded body (46) according to one of claims 8 to 10, the second moulded body preferably being connected to a water-conducting device according to one of claims 11 to 12.

## Revendications

1. Pièce de forme définie (1, 40, 44, 46) pour l'amélioration des conditions de culture de plantes, présentant au moins une élévation (15), ladite élévation s'amincissant dans l'ensemble à partir de son pied, de sorte que la pièce de forme peut être introduite, plus particulièrement enfoncée ou enfouie dans un substrat de culture contenu dans un récipient à plantes avec ladite élévation en avant, ladite élévation étant au moins pour une partie active constituée d'un matériau capillaire perméable à l'eau et/ou présentant des trous et/ou étant couverte d'une couche conductrice d'eau, de sorte que des substances telles que l'air et l'eau en particulier sont échangeables par ladite élévation avec l'intérieur du substrat de culture afin de provoquer une aération et/ou une irrigation et/ou une fertilisation améliorées à l'intérieur du substrat de culture et particulièrement dans la balle de racines d'une plante; ladite élévation étant posée sur une base (9; 49); et la base (9; 49) présentant, du côté opposé à l'élévation (15), une cavité (26) communiquant avec l'élévation pour un échange de liquide, de sorte que la cavité agit comme un réservoir d'eau et est en outre plus particulièrement adaptée à recevoir un matériau absorbeur ou conducteur d'eau ou une source de substances nutritives et actives.

2. Pièce de forme (1, 40, 44, 46) selon la revendication 1, **caractérisée en ce qu'**elle est entièrement constituée d'un matériau perméable à l'eau, préférablement d'argile et plus préférablement d'argile hautement poreux.

3. Pièce de forme (1, 40, 44, 46) selon la revendication 2, **caractérisée en ce que** le matériau perméable à l'eau contient des agents produisant la porosité et/ou des composants (15) stockant l'eau, plus particulièrement des zéolites, en quantités efficaces.

4. Pièce de forme (1, 40, 44, 46) selon l'une des revendications 1 à 3, **caractérisée en ce que** des substances nutritives et/ou des agents actifs sont incorporés dans la pièce de forme afin d'obtenir un dégagement de ces substances sur une longue durée.

5. Pièce de forme (1, 40, 44, 46) selon l'une des revendications 1 à 4, **caractérisée en ce qu'**au moins l'élévation (15) est constituée d'une mousse rigide polymérique et perméable à l'eau.

6. Pièce de forme (1, 40, 44, 46) selon l'une des revendications 1 à 5, **caractérisée en ce qu'**au moins le sommet le plus élevé (17, 50) de l'élévation (15) est recouvert d'une calotte en un matériau plus résistant, plus particulièrement en métal ou en plastique, de sorte qu'une matière synthétique mince et le substrat de culture peuvent être pénétrés par l'élévation (15) essentiellement sans endommagement de cette dernière.

7. Pièce de forme (1, 40, 44, 46) selon l'une des revendications 1 à 6, **caractérisée en ce que** l'élévation (15) présente essentiellement la forme d'un cône solide ou creux.

8. Pièce de forme (46) pour l'amélioration des conditions de culture de plantes, présentant au moins une élévation (15), ladite élévation s'amincissant dans l'ensemble à partir de son pied, de sorte que la pièce de forme peut être introduite, plus particulièrement enfoncée ou enfouie dans le substrat de culture contenu dans un récipient à plantes avec ladite élévation en avant, une partie efficace au moins de ladite élévation étant constituée d'un matériau capillaire perméable à l'eau et/ou présentant des ouvertures à l'intérieur et/ou étant couverte d'une couche conductrice d'eau, de sorte que des substances telles que l'air et l'eau en particulier sont échangeables par ladite élévation avec l'intérieur du substrat de culture afin de provoquer une irrigation et/ou une fertilisation améliorées à l'intérieur du substrat de culture et particulièrement dans la balle de racines d'une plante, et l'élévation étant essentiellement imperméable à l'eau sur une partie substantielle (53) à partir du sommet (50), plus particulièrement sur environ un quart au moins et sur trois quarts au plus, tandis que la partie restante supérieure de l'élévation (48) est perméable à l'eau et/ou munie d'ouvertures (54), de sorte que lorsqu'elle est enfoncée dans le substrat de culture depuis le haut, la partie imperméable à l'eau agit comme réservoir d'eau pour l'échange de liquide par la partie supérieure afin de contrecarrer le dessèchement de la couche supérieure du substrat de culture.

9. Pièce de forme (46) selon la revendication 8, **caractérisée en ce que** l'élévation est extérieurement ou intérieurement pourvue sur une partie inférieure substantielle (53) à partir du sommet (50), plus particulièrement sur environ un quart au moins, d'une enveloppe (52) et/ou d'une couche imperméable à l'eau ou inhibitrice d'eau, tandis que la partie restante supérieure (55) de l'élévation (48) est perméable à l'eau et/ou munie d'ouvertures (54), de sorte que lorsqu'elle est enfoncée dans le substrat de culture depuis le haut, la partie inférieure (52) forme un réservoir.

10. Pièce de forme (46) selon la revendication 9, **caractérisée en ce que** l'enveloppe (52) et/ou la couche s'étend essentiellement sur toute la longueur de la pièce de forme et est munie dans la zone supérieure de la pièce de forme d'ajours ou de passages afin d'obtenir ladite perméabilité à l'eau.

11. Dispositif conducteur d'eau (76) pour utilisation avec une pièce de forme selon l'une des revendications 8 à 10, essentiellement composée d'un auxiliaire de remplissage (78) en forme d'entonnoir et d'une conduite y reliée qui est munie de moyens de connexion et de sorties agencées dans ces derniers, permettant d'attacher le dispositif à des pièces de forme (46) à l'aide desdits moyens de connexion et d'amener un liquide, plus particulièrement de l'eau, à l'aide de l'auxiliaire de remplissage aux pièces de forme connectées.

12. Dispositif conducteur d'eau selon la revendication 11, **caractérisé en ce qu'**il est suffisamment pliable pour rester attaché aux pièces de forme (46) lorsque celles-ci sont enfoncées depuis le haut dans le substrat de culture contenu dans un récipient à plantes.

13. Un récipient à plantes (3) intégrant au moins une pièce de forme (81) selon l'une des revendications 1 à 7.

14. Un récipient à plantes (3) dont le fond forme au moins une élévation (81) d'une pièce de forme selon l'une des revendications 1 à 7, de telle sorte que le fond du récipient à plantes forme essentiellement la base d'une telle pièce de forme.

15. Agencement de culture de plantes, comprenant un récipient à plantes (3, 60), destiné à recevoir le substrat de culture et la plante, selon l'une des revendications 13 à 14, et/ou au moins une pièce de forme (1, 40, 44) selon l'une des revendications 1 à 7, disposée au fond du récipient à plantes ou sous le récipient à plantes, l'élévation (15, 81) de la pièce de forme rentrant dans l'intérieur du récipient à plantes afin d'assurer un échange d'eau et une aération à l'intérieur du récipient à plantes au moyen de la pièce de forme (1, 4, 40).

16. Agencement de culture de plantes selon l'une des revendications 13 à 15, **caractérisé en ce que** la hauteur de ladite élévation (15) est au moins égale à 1/5, préférablement à 1/4 et plus préférablement non supérieur à 1/2 du niveau de remplissage du récipient à plantes (3, 60).

17. Arrangement de culture de plantes selon l'une des revendications 13 à 16, **caractérisé en ce qu'**une couche d'un matériau (10) granuleux, de préférance à pouvoir d'emmagasinage d'eau, préférablement, en particulier, de l'argile granulé, est disposée au fond du récipient à plantes (3, 60) et est dépassée en hauteur par une partie active de l'élévation (15, 81) afin de former au fond du récipient à plantes une zone d'emmagasinage d'eau, ladite élévation permettant un échange de liquide entre ladite zone et le substrat de culture empilé sur cette dernière.

18. Arrangement de culture de plantes selon la revendication 17, **caractérisé en ce qu'**au fond du récipient à plantes ou sous le récipient à plantes est disposé un bac (7, 20) dont le bord supérieur (6) sert de déversoir, déterminant ainsi un niveau maximum d'un réservoir d'eau dans le bas du récipient à plantes qui est inférieur au niveau de remplissage du matériau (10) à pouvoir d'emmagasinage d'eau sous le substrat de culture afin d'éviter un contact direct entre le substrat de culture et l'eau.

19. Arrangement de culture de plantes selon l'une des revendications 13 à 18 et/ou comprenant du moins une deuxième pièce de forme (46) selon l'une des revendications 8 à 10, ladite deuxième pièce de forme étant préférablement reliée à un dispositif conducteur d'eau selon l'une des revendications 11 à 12.
